# FASCICULE DE BREVET EUROPEEN

(11) **EP 0 746 701 B1**
(45) Date de publication et mention de la délivrance du brevet: **10.08.2005**
(21) Numéro de dépôt: 95943255.0
(22) Date de dépôt: 21.12.1995
(51) Int. Cl.: F16F 15/129

(54) **AMORTISSEUR DE TORSION COMPORTANT PLUSIEURS ETAGES DE FROTTEMENT**
DREHSCHWINGUNGSDÄMPFER MIT MEHREREN REIBUNGSSTUFEN
TORSIONAL DAMPER COMPRISING A NUMBER OF FRICTION STAGES

(30) Priorité: 26.12.1994 FR 9415634
(43) Date de publication de la demande: 11.12.1996
(73) Titulaire: VALEO EMBRAYAGES s.a.s., 80009 Amiens Cedex 1 (FR)
(72) Inventeur: LEFEVRE, Gérard, F-80480 Saleux (FR)
(74) Mandataire: Lemaire, Marc
(86) Numéro de dépôt international: PCT/FR1995/001708
(87) Numéro de publication internationale: WO 1996/020357

(56) Documents cités:
- DE-A- 4 417 660
- DE-B- 2 430 160
- FR-A- 2 365 728
- FR-A- 2 532 019
- FR-A- 2 551 153
- GB-A- 2 254 398

## Description

L'invention concerne un amortisseur de torsion comprenant des parties coaxiales montées rotatives les unes par rapport aux autres, plusieurs étages d'amortissement élastique à action circonférentielle agencés entre celles-ci et plusieurs étages de frottement intervenant entre lesdites parties coaxiales; l'invention concerne plus particulièrement la structure des étages de frottement. Un tel amortisseur de torsion peut s'appliquer, notamment à une friction d'embrayage de véhicule automobile. Un tel amortisseur est décrit dans le document GB-A-2 254 398 conforme au préambule de la revendication 1.

Dans un amortisseur de torsion du type désigné ci-dessus, formant par exemple friction d'embrayage, l'une des parties rotatives porte un disque de friction destiné à être solidarisé en rotation avec un premier arbre, en pratique un arbre menant tel que le vilebrequin du moteur dans le cas d'un véhicule automobile, tandis qu'une autre partie rotative comporte un moyeu par lequel elle est destinée à être solidarisée en rotation avec un deuxième arbre, en pratique un arbre mené tel que l'arbre d'entrée d'une boîte de vitesses, dans le cas envisagé. Un étage d'amortissement principal comprend un voile de moyeu comportant des dentures intérieures montées avec jeu angulaire prédéterminé sur des dentures extérieures dudit moyeu et deux flasques annulaires, dits rondelles de guidage, disposés axialement de part et d'autre dudit voile de moyeu. Les premiers moyens élastiques à action circonférentielle de cet étage d'amortissement principal sont interposés entre le voile et les rondelles de guidage. La délimitation du débattement angulaire possible entre le moyeu et le voile de moyeu est déterminée par le jeu circonférentiel entre les dentures. Un sous-ensemble de préamortissement de torsion est interposé entre le moyeu et le voile de moyeu en étant intercalé axialement entre l'une des rondelles de guidage, dite première rondelle de guidage, et le voile de moyeu pour notamment, filtrer les vibrations dans le domaine du ralenti du régime du moteur à combustion interne du véhicule. Il comprend des seconds moyens élastiques à action circonférentielle, de plus faible raideur que ceux de l'étage d'amortissement principal, intervenant circonférentiellement entre deux rondelles de guidage de plus petit diamètre couplées au voile de moyeu et un voile auxiliaire fixé au moyeu.

Plusieurs étages de frottement à action axiale sont agencés "en parallèle" sur les étages d'amortissement. On distingue notamment un étage de frottement principal dont le frottement est réglé pour s'exercer conjointement avec l'étage d'amortissement principal. D'autres étages de frottement plus faibles sont prévus pour intervenir dans des plages de couple plus faibles. Dans tous les cas, il est souhaitable de bien pouvoir maîtriser la charge de chaque étage de frottement et de faire en sorte que lesdits étages de frottement soient relativement indépendants les uns des autres et puissent être réglés avec précision.

Pour ce faire, il est avantageux que les ressorts à action axiale (dans la pratique des rondelles ondulées ou des rondelles Belleville) qui sont prévus pour ajuster la charge des différents étages de frottement, aient des diamètres relativement importants. Cependant, les étages de frottement ne doivent pas augmenter l'encombrement axial de l'amortisseur de torsion ce qui est le cas dans le document DE-A-4 417 660 lorsque l'on intercale axialement un sous ensemble de préamortissement entre le voile de moyeu et l'une des rondelles de guidage.

L'invention apporte une solution satisfaisante à tous ces problèmes.

Suivant l'invention ces problèmes sont résolus par la partie caractérisante de la revendication 1.

L'agencement tel que défini ci-dessus permet la création d'un sous-ensemble et libère un certain espace annulaire radialement à l'intérieur des éléments constitutifs de l'étage d'amortissement principal. En outre, la première rondelle de serrage élastique de l'étage de frottement principal permet de serrer la rondelle de frottement au contact de la rondelle de guidage concernée et ce, grâce aux rondelles d'appui entretoisées.

On peut donc régler précisément le serrage et ce, de manière indépendante, aucune action n'étant exercée par exemple sur le sous-ensemble de préamortissement.

Grâce à l'invention, un autre étage de frottement est logé dans l'espace libéré entre le moyeu et la même rondelle de guidage. Cet étage de frottement, relativement faible, est prévu pour intervenir dans la zone de débattement angulaire du sous-ensemble de préamortissement de torsion. Il comprend selon une autre caractéristique un palier annulaire centré par la deuxième rondelle de guidage, une rondelle de protection intercalée axialement entre un épaulement radial du moyeu et ce palier et une rondelle élastique à action axiale, intercalée entre ledit palier et la deuxième rondelle de guidage.

Enfin, un étage de frottement intermédiaire est agencé entre le voile de moyeu et la rondelle de guidage dudit étage de frottement principal. La rondelle élastique à action axiale de cet étage a sensiblement le même diamètre que celle de l'étage de frottement principal.

Plus précisément, l'étage de frottement intermédiaire comporte une rondelle de frottement intermédiaire en contact avec le voile de moyeu. Cette rondelle de frottement comprend des moyens d'engrènement à jeu avec ledit moyeu. L'étage de frottement intermédiaire comporte également une rondelle d'appui intermédiaire en contact avec ladite rondelle de frottement intermédiaire et une rondelle de serrage élastique intermédiaire intercalée entre cette rondelle d'appui et l'une des rondelles d'appui de l'étage de frottement principal. La rondelle d'appui intermédiaire en contact avec la rondelle de frottement intermédiaire est liée en rotation à la deuxième rondelle de guidage autour de laquelle est agencé ledit étage de frottement principal.

Ainsi, les étages de frottement sont implantés radialement en dessous des moyens élastiques a action circonférentielle de l'étage d'amortissement principal. On peut régler de manière précise et indépendante, les différents frottements.

L'invention sera mieux comprise et d'autres avantages de celle-ci apparaîtront plus clairement à la lumière de la description qui va suivre d'un amortisseur de torsion formant friction d'embrayage, conforme à son principe, donnée uniquement à titre d'exemple et faite en référence au dessin annexé dans lequel:
- la figure unique est une vue partielle en coupe et en élévation du dispositif amortisseur de torsion en question.

En se reportant au dessin, on a représenté un amortisseur de torsion 11 formant une friction d'embrayage et comportant plusieurs parties montées rotatives les unes par rapport aux autres, d'axe axial commun y-y. L'une des parties comprend essentiellement deux flasques annulaires 13, 14, communément appelés rondelles de guidage, dont l'un porte un disque de friction 15. Une autre partie est constituée par un moyeu 17, tubulaire, cannelé intérieurement pour pouvoir être solidarisé en rotation à un arbre mené, en l'occurrence l'arbre d'entrée d'une boîte de vitesses, non représenté. Les deux rondelles de guidage 13, 14 sont solidarisées entre elles par des entretoises d'orientation axiale (non visibles sur le dessin) servant, de manière connue en soi, également à la fixation du disque 15 à la rondelle de guidage 13. Ces entretoises traversent à jeu circonférentiel un voile de moyeu 22 décrit ci-après et ce, de manière connue en soi. Le disque de friction 15 est destiné à être solidarisé en rotation avec un arbre menant, en l'occurrence le vilebrequin d'un moteur à combustion interne en étant serré, à la faveur de ses garnitures de frottement, par une manoeuvre d'embrayage entre un plateau de pression et un plateau de réaction lié au vilebrequin (non représentés). Un étage d'amortissement principal 20 est défini entre le disque de friction 15 et le moyeu 17. Classiquement, cet étage d'amortissement élastique à action circonférentielle est agencé entre les rondelles de guidage 13, 14 et le voile de moyeu 22 s'étendant entre celles-ci. Des ressorts hélicoïdaux 23a, 23b, sont installés par paire, dans des fenêtres pratiquées en vis-à-vis dans les rondelles de guidage 13, 14 d'une part et le voile de moyeu 22 d'autre part, pour former les moyens élastiques à action circonférentielle, dits premiers moyens élastiques, de cet étage d'amortissement principal.

Le voile de moyeu 22 comporte des dentures intérieures 25 susceptibles de coopérer avec des dentures extérieures 26 du moyeu. Un jeu circonférentiel prédéterminé est prévu entre les dentures du voile de moyeu et celles du moyeu, de façon à déterminer un débattement angulaire possible entre celles-ci. Ici, chaque denture 25, 26 comprend des dents de forme trapézoïdale en alternance avec des échancrures.

En outre, un sous-ensemble de préamortissement de torsion 28 est interposé entre le moyeu 17 et le voile de moyeu 22. Ce sous-ensemble est intercalé axialement entre l'une des rondelles de guidage (ici la rondelle de guidage 13), et le voile de moyeu 22. Il comprend, radialement en dessous des ressorts 23a, 23b, deux flasques 30, 31 formant rondelles de guidage, de plus petit diamètre, réunis entre eux par encliquetage à la faveur de pattes d'orientation axiale 32 issues du flasque 30, lesquelles sont engagées dans des trous 33 du voile de moyeu 22 pour liaison en rotation des rondelles de guidage 30, 31 avec le voile 22.

Un voile auxiliaire 35 intercalé axialement entre les deux petites rondelles de guidage 30, 31 est fixé par sertissage au moyeu 17. De façon analogue à l'étage d'amortissement principal, des seconds moyens élastiques à action circonférentielle, ici des ressorts à boudin, sont agencés dans des fenêtres en vis-à-vis des petites rondelles de guidage 30, 31 et du voile auxiliaire 35 pour intervenir circonférentiellement entre eux. Ces seconds moyens élastiques à action circonférentielle sont constitués par des ressorts 38 de plus faible raideur que ceux qui équipent l'étage d'amortissement principal.

La rondelle de guidage 13, dite première rondelle de guidage 13, est solidaire en rotation, d'un palier conique 40 qui est monté avec friction sur une portée conique 41 correspondante, définie à l'extérieur du moyeu 17. Le palier 40 présente, de manière connue en soi, des pions (non référencés) engagés dans des ouvertures de la rondelle de guidage 13 pour sa liaison en rotation avec celle-ci. D'autre part, une rondelle de friction 43 est intercalée entre la face intérieure de cette rondelle de guidage 13 et la rondelle de guidage adjacente 30, de petit diamètre, du sous-ensemble de préamortissement de torsion 28, de manière à éviter un contact métal sur métal, les rondelles de guidage 30, 13 étant métalliques.

Selon une caractéristique importante de l'invention, un étage de frottement principal 45 est agencé axialement de part et d'autre de la rondelle de guidage 14, dite seconde rondelle de guidage. Il comporte deux rondelles d'appui 47, 48 disposées de part et d'autre de la rondelle de guidage 14 et réunies par des entretoises 49 d'orientation axiale, traversant la rondelle de guidage 14. Une première rondelle de frottement 50 est couplée en rotation au voile de moyeu 22 et intercalée entre la rondelle de guidage 14 et l'une des rondelles d'appui, ici la rondelle d'appui 48 intérieure. La liaison en rotation entre cette rondelle de frottement 50 et le voile de moyeu 22 est réalisée par des pattes 54 pliées axialement de ladite rondelle de frottement, engagées dans les fenêtres du voile de moyeu qui abritent les moyens élastiques de l'étage d'amortissement principal. Cette liaison est établie avec un jeu circonférentiel choisi, les pattes 54 pénétrant à jeu circonférentiel dans des encoches prévues dans les bords longitudinaux internes desdites fenêtres. Le montage est complété par une première rondelle de serrage élastique 56 (par exemple une rondelle Belleville) intercalée entre la même rondelle de guidage 14 et l'autre rondelle d'appui 47, extérieure.

Comme on peut le remarquer sur le dessin, le montage qui vient d'être décrit permet de disposer d'une rondelle de frottement 50 et d'une rondelle élastique 56 d'un assez grand diamètre, ce qui est favorable au réglage et à la reproductibilité de la force de frottement désirée. En outre, il est formé de manière avantageuse un sous-ensemble rondelle de guidage 14 - étage de frottement principal. Par ailleurs, cet agencement libère un espace annulaire radialement à l'intérieur des éléments constitutifs dudit étage de frottement principal. Ceci est mis à profit selon l'invention pour loger un second étage de frottement 60 développant un frottement faible en rapport avec l'amortissement élastique du sous-ensemble de préamortissement 28. Cet étage de frottement comprend un palier annulaire 62 de maintien, monté en rotation à jeu radial sur une portée cylindrique du moyeu, une rondelle de protection 64 intercalée axialement entre un épaulement radial du moyeu et ledit palier annulaire et une deuxième rondelle élastique à action axiale 63, ici du type rondelle Belleville, intercalée entre ledit palier 62 et ladite rondelle de guidage 14. La rondelle élastique 63 conditionne également le frottement du palier conique 40 et de la rondelle de friction 43. La rondelle 64 (en contact avec les dentures extérieures 26 du moyeu) évite une détérioration du palier 62, ici en matière plastique comme le palier 40. On notera que le palier 62 est lié en rotation par des pions à la rondelle de guidage 14 et a, en section, la forme d'un L. Les pions sont engagés dans des ouvertures de la rondelle de guidage 14. Le palier 63 maintien et centre intérieurement la rondelle élastique 63.

Enfin, un étage de frottement intermédiaire 70 peut aussi être installé entre le voile de moyeu 22 et la rondelle de guidage 14 dudit étage de frottement principal, à une distance radiale sensiblement égale à celle où se situe l'étage de frottement principal 45. Cet étage de frottement intermédiaire 70 comporte ainsi une rondelle élastique à action axiale 72, ici une rondelle ondulée, ayant sensiblement le même diamètre que celle de l'étage de frottement principal. Cette rondelle de serrage élastique intermédiaire est intercalée entre la rondelle d'appui intérieure 48 de l'étage de frottement principal 45 et une rondelle d'appui 74 intermédiaire en contact avec une rondelle de frottement 76 intermédiaire, elle-même en contact frottant avec une face du voile de moyeu 22. Cette rondelle de frottement 76 comprend intérieurement des dentures d'engrènement à dents et échancrures coopérant avec les dentures extérieures 26 du moyeu. La rondelle d'appui 74 intermédiaire est solidaire en rotation de la deuxième rondelle de guidage 14 par des pattes 78 repliées suivant une direction axiale et engagées sans jeu circonférentiel dans des trous 79 de ladite rondelle de guidage 14. Les pattes 78 s'étendent radialement au dessus des entretoises 49 traversant sans jeu circonférentiel lesdits trous 79. La rondelle de frottement 76 intermédiaire constitue une rondelle tiroir et permet d'atténuer les bruits dus aux chocs provoqués par les venue en prise des dents des dentures 25 du voile 22 avec les dents des dentures 26 en forme de cannelures du moyeu 17. Bien entendu, pour ce faire, la rondelle 76 engrène avec le moyeu 17 avec un jeu circonférentiel inférieur à celui prévu entre les dentures 25, 26. On peut donc choisir la valeur de la tare de la rondelle 72, inférieur ici à la valeur de la tare de la rondelle 56. Pour mémoire, on rappellera que, dans une première phase du débattement angulaire entre le moyeu 17 et le disque 15, l'étage d'amortissement principal 20 forme un bloc du fait de la forte raideur des ressorts 23a, 23b.

Les ressorts 38 du sous-ensemble de préamortissement de torsion 28 sont donc comprimés. Cette phase se poursuit jusqu'à ce que le jeu entre les dentures 25 et 26 soit annulé. A partir de cet instant, le voile de moyeu 22 se déplace par rapport aux rondelles de guidage 13, 14, avec intervention de la rondelle de frottement 50, les ressorts 38 restant bandés. Bien entendu, la rondelle 76 permet d'amortir les chocs provoqués par la venue en prise des dents du voile 22 avec celles du moyeu 17 de manière précitée.

La présente invention n'est pas limitée à l'exemple de réalisation décrit. En particulier, le palier 40 n'est pas forcément conique, il peut avoir en section, la forme du palier 62, la partie 41 étant alors cylindrique. D'une manière générale, ce palier 40 centre la rondelle de guidage 13 et donc la rondelle de guidage 14.

Alors que dans la figure illustrée, la limitation du débattement angulaire entre le disque 15 et le moyeu 17 est réalisée par butée des entretoises reliant entre elles les rondelles de guidage 13, 14 avec les bords concernés des évidements du voile de moyeu 22 qu'elles traversent, cette limitation du débattement peut être réalisée par venue à spires jointives des ressorts 23a, 23b.

Le disque 15 peut être dépourvu de garnitures de frottement et être fixé directement sur un plateau solidaire du vilebrequin du moteur. En variante, c'est la rondelle 13 qui est fixée sur ledit plateau.

Les rondelles de guidage 30, 31 peuvent être en matière plastique en sorte que la présence de la rondelle 43 n'est pas obligatoire.

Les pattes 78 de la rondelle 74 peuvent être prolongées et être déformées par exemple latéralement ou radialement vers l'extérieur à leur extrémité libre pour former des épaulements au contact de la face externe de la rondelle d'appui 47. Ainsi, les rondelles 74 et 72 peuvent être intégrées au sous-ensemble rondelle de guidage 14 - étage de frottement principal.

C'est la raison pour laquelle la rondelle d'appui 74 est trouée en regard des rivets 49 pour former ledit sous-ensemble.

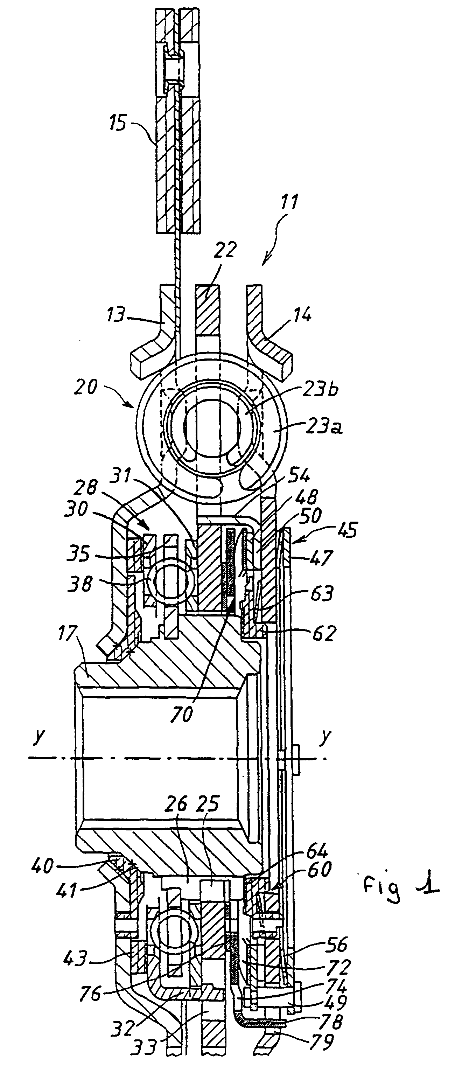

Bien entendu, au lieu d'être métalliques, comme à la figure 1, les rondelles 74, 50, 47, 48 peuvent être en matière plastique.

Ainsi qu'on l'aura compris la charge de chaque étage de frottement est indépendante relativement de celle des autres étages. Ces étages de frottement sont implantés radialement en dessous des ressorts 23a, 23b.

Ici l'étage de frottement 45 a une charge supérieure à l'étage de frottement intermédiaire 70, qui lui-même à une charge supérieure ou deuxième étage de frottement 60. Ici la rondelle de frottement 50 intervient de manière différée puisque les pattes 54 pénètrent à jeu circonférentiel dans les encoches des fenêtres du voile 22.

Ainsi au début du mouvement relatif entre le voile 22 et les rondelles de guidage 13,14 l'étage de frottement 70 intervient seul.

Plus précisément, avant rattrapage du jeu angulaire entre les dentures du voile de moyeu 22 et du moyeu 17, les deux faces de la rondelle de frottement 76 frottent contre ledit voile 22 et la rondelle 74 de l'étage de frottement.

Après rattrapage du jeu entre lesdites dentures seul un frottement se produit entre les rondelles 76,74.

On obtient ainsi une filtration optimale des vibrations, notamment lorsque l'étage de frottement principal 20 comporte des ressorts 23b, 23a, de raideur différente et d'action étagée.

Bien entendu en variante les pattes 54 peuvent pénétrer sans jeu circonférentiel dans les encoches précitées. De même certains des moyens élastiques à action circonférentielle peuvent consister en des bloc en matière élastique, tel que de l'élastomère.

On appréciera que la rondelle de guidage 14 n'est pas modifiée de manière profonde, seul le trou 49 est modifié en sorte que la solution selon l'invention est économique.

On appréciera également que la première rondelle élastique 56 est bien protégée par la rondelle d'appui 47.

## Revendications

1. Amortisseur de torsion comportant plusieurs étages d'amortissement élastique à action circonférentielle et plusieurs étages de frottement à action axiale, du type comprenant un moyeu (17) destiné à être relié à un arbre, un étage d'amortissement principal (20) comportant un voile de moyeu (22) muni de dentures intérieures montées avec jeu angulaire prédéterminé sur des dentures extérieures dudit moyeu, deux flasques annulaires ou première et deuxième rondelles de guidage (13, 14) disposés axialement de part et d'autre dudit voile de moyeu et des premiers moyens élastiques (23a, 23b) à action circonférentielle interposés circonférentiellement entre le voile et lesdites rondelles de guidage et un sous-ensemble de pré-amortissement de torsion (28), d'une part, interposé entre le moyeu (17) et le voile de moyeu (22) et, d'autre part, intercalé axialement entre l'une des rondelles de guidage (13), dite première rondelle de guidage (13), et le voile de moyeu (22), ledit sous-ensemble de pré-amortissement de torsion comportant des moyens élastiques à action circonférentielle (38), dits deuxièmes moyens élastiques (38), de plus faible raideur que ceux des premiers moyens élastiques (23a, 23b), un deuxième étage de frottement (60) étant agencé dans un espace annulaire laissé libre radialement à l'intérieur des éléments constitutifs d'un étage de frottement principal (45) entre ledit moyeu et la deuxième rondelle de guidage (14) et un étage de frottement intermédiaire (70) comprenant une rondelle de frottement (76) intermédiaire qui est en contact avec le voile de moyeu (22) et qui engrène avec ledit moyeu (17) avec un jeu circonférentiel inférieur à celui prévu entre les dentures du moyeu (17) et les dentures du voile de moyeu (22), , **caractérisé en ce que** l'étage de frottement principal (45) est agencé axialement de part et d'autre de la deuxième rondelle de guidage (14), et comporte deux rondelles d'appui (47, 48) disposées de part et d'autre de la deuxième rondelle de guidage (14) et réunies par des entretoises (49) d'orientation axiale traversant ladite deuxième rondelle de guidage, une première rondelle de frottement (50) couplée en rotation audit voile de moyeu (22) et intercalée entre la deuxième rondelle de guidage (14) et une rondelle d'appui (48) et une première rondelle de serrage élastique (56) intercalée entre la même rondelle de guidage (14) et l'autre rondelle d'appui (47), et **en ce que** l'étage de frottement intermédiaire (70) est agencé axialement entre ledit voile de moyeu (22) et la deuxième rondelle de guidage (14) dudit étage de frottement principal et comprend :
- une rondelle d'appui (74) intermédiaire, en contact avec la rondelle de frottement (76) intermédiaire, liée en rotation par des pattes (78) à la deuxième rondelle de guidage (14),
- une rondelle de serrage élastique (72) intermédiaire, intercalée entre ladite rondelle d'appui (74) intermédiaire et une rondelle d'appui (48) dudit étage de frottement principal (45),
de manière que cette rondelle de frottement (76) intermédiaire intervienne en fin de la phase de pré-amortissement, c'est à dire à la fin du mouvement relatif du voile de moyeu (22) par rapport au moyeu (17), par frottement sur le voile de moyeu (22) et ladite rondelle d'appui intermédiaire (74), et de manière que l'étage de frottement intermédiaire (70) intervienne au cours du fonctionnement de l'étage d'amortissement principal seul par frottement de la rondelle de frottement (76) intermédiaire sur la rondelle d'appui (74) intermédiaire.

2. Amortisseur de torsion selon la revendication précédente, **caractérisé en ce que** la charge de l'étage de frottement intermédiaire (70) est inférieure à la charge de l'étage de frottement principal (45) et supérieure à la charge du deuxième étage de frottement (60).

3. Amortisseur de torsion selon l'une quelconque des revendications précédentes, **caractérisé en ce que** les rondelles précitées constituant l'étage de frottement principal (45) et l'étage de frottement intermédiaire (70) ont des diamètres voisins.

4. Amortisseur de torsion selon l'une quelconque des revendications précédentes, **caractérisé en ce que** des pattes (78) de la rondelle d'appui (74) intermédiaire de l'étage de frottement intermédiaire (70) traversent des trous (79) de la seconde rondelle de guidage (14) radialement au-dessus des entretoises (49) de l'étage de frottement principal (45), lesdites entretoises (49) traversant également lesdits trous.

5. Amortisseur de torsion selon la revendication précédente, **caractérisé en ce que** les pattes (78) de la rondelle d'appui (74) intermédiaire de l'étage de frottement intermédiaire (70) sont prolongées et déformées à leur extrémité libre pour intégration de la rondelle d'appui (74) et sa rondelle de serrage élastique (72) associée au sous-ensemble rondelle de guidage (14) - étage de frottement principal (45).

6. Amortisseur de torsion selon l'une quelconque des revendications précédentes, **caractérisé en ce que** le deuxième étage de frottement comprend un palier annulaire (62), lié en rotation à la deuxième rondelle de guidage (14), une rondelle de protection (64) intercalée axialement entre un épaulement radial dudit moyeu et ledit palier et une rondelle deuxième élastique à action axiale (63), intercalée entre ledit palier et la deuxième rondelle de guidage (14).

7. Amortisseur de torsion selon la revendication précédente, **caractérisé en ce que** la première rondelle de guidage (13) est montée sur ledit moyeu par l'intermédiaire d'un palier conique (40) et **en ce que** ce palier conique forme un élément de frottement chargé par la deuxième rondelle élastique à action axiale (63) du second étage de frottement, agencé dans l'espace annulaire laissé libre radialement à l'intérieur des éléments constitutifs dudit étage de frottement principal.

8. Amortisseur de torsion selon l'une quelconque des revendications précédentes, **caractérisé en ce que** la première rondelle de frottement (50) de l'amortisseur principal est couplée avec jeu circonférentiel au voile (22).

## Patentansprüche

1. Drehschwingungsdämpfer mit mehreren umfangsmäßig wirkenden Stufen zur elastischen Dämpfung und mehreren axial wirkenden Reibungsstufen, umfassend eine Nabe (17) zur Verbindung mit einer Welle, eine Hauptdämpfungsstufe (20) mit einer Nabenscheibe (22), die mit Innenverzahnungen versehen ist, welche mit vorbestimmtem Winkelspiel an den Außenverzahnungen der Nabe angebracht sind, zwei ringförmige Flansche oder eine erste und zweite Führungsscheibe (13, 14), die axial auf beiden Seiten der Nabenscheibe angeordnet sind, in Umfangsrichtung wirkende erste elastische Mittel (23a, 23b), die umfangsmäßig zwischen der Nabenscheibe und den Führungsscheiben angeordnet sind, und eine Drehschwingungs-Vordämpfer-Untergruppe (28), die einerseits zwischen der Nabe (17) und der Nabenscheibe (22) und andererseits axial zwischen einer der Führungsscheiben (13), der so genannten ersten Führungsscheibe (13), und der Nabenscheibe (22) angeordnet ist, wobei die Drehschwingungs-Vordämpfer-Untergruppe in Umfangsrichtung wirkende elastische Mittel (38), die so genannten zweiten elastischen Mittel (38), mit geringerer Steifigkeit als jene der ersten elastischen Mittel (23a, 23b) aufweist, wobei eine zweite Reibungsstufe (60) in einem radial im Inneren der eine Hauptreibungsstufe (45) bildenden Elemente frei gelassenen Raum zwischen der Nabe und der zweiten Führungsscheibe (14) angeordnet ist und wobei eine Zwischenreibungsstufe (70) eine Zwischenreibscheibe (76) umfasst, die mit der Nabenscheibe (22) in Kontakt steht und mit der Nabe (17) mit einem Umfangsspiel, das geringer ist als das zwischen den Verzahnungen der Nabe (17) und den Verzahnungen der Nabenscheibe (22) vorgesehene, in Eingriff steht,
**dadurch gekennzeichnet,**
**dass** die Hauptreibungsstufe (45) axial auf beiden Seiten der zweiten Führungsscheibe (14) angeordnet ist und zwei Stützscheiben (47, 48), die auf beiden Seiten der Führungsscheibe (14) angeordnet und durch axial ausgerichtete, die zweite Führungsscheibe durchquerende Streben (49) zusammengefügt sind, eine erste Reibscheibe (50), die drehfest mit der Nabenscheibe (22) verbunden und zwischen der zweiten Führungsscheibe (14) und einer Stützscheibe (48) angeordnet ist, und eine erste, elastische Klemmscheibe (56), die zwischen der gleichen Führungsscheibe (14) und der anderen Stützscheibe (47) angeordnet ist, umfasst,
und **dass** die Zwischenreibungsstufe (70) axial zwischen der Nabenscheibe (22) und der zweiten Führungsscheibe (14) der Hauptreibungsstufe angeordnet ist und Folgendes umfasst:
- eine Zwischenstützscheibe (74), die mit der Zwischenreibscheibe (76) in Kontakt steht und durch Ansätze (78) mit der zweiten Führungsscheibe (14) drehfest verbunden ist,
- eine elastische Zwischenklemmscheibe (72), die zwischen der Zwischenstützscheibe (74) und einer Stützscheibe (48) der Hauptreibungsstufe (45) angeordnet ist,
so dass diese Zwischenreibscheibe (76) am Ende der Vordämpfungsphase, das heißt am Ende der Relativbewegung der Nabenscheibe (22) bezüglich der Nabe (17) durch Reibung an der Nabenscheibe (22) und der Zwischenstützscheibe (74) wirkt und die Zwischenreibungsstufe (70) nur während des Betriebs der Hauptdämpfungsstufe durch Reibung der Zwischenreibscheibe (76) an der Zwischenstützscheibe (74) wirkt.

2. Drehschwingungsdämpfer nach dem vorhergehenden Anspruch, **dadurch gekennzeichnet, dass** die Last der Zwischenreibungsstufe (70) geringer ist als die Last der Hauptreibungsstufe (45) und größer ist als die Last der zweiten Reibungsstufe (60).

3. Drehschwingungsdämpfer nach einem der vorhergehenden Ansprüche, **dadurch gekennzeichnet, dass** die oben genannten Scheiben, die die Hauptreibungsstufe (45) und die Zwischenreibungsstufe (70) bilden, ähnliche Durchmesser aufweisen.

4. Drehschwingungsdämpfer nach einem der vorhergehenden Ansprüche, **dadurch gekennzeichnet, dass** Ansätze (78) der Zwischenstützscheibe (74) der Zwischenreibungsstufe (70) Löcher (79) der zweiten Führungsscheibe (14) radial außerhalb der Streben (49) der Hauptreibungsstufe (45) durchqueren, wobei die Streben (49) ebenfalls die Löcher durchqueren.

5. Drehschwingungsdämpfer nach dem vorhergehenden Anspruch, **dadurch gekennzeichnet, dass** die Ansätze (78) der Zwischenstützscheibe (74) der Zwischenreibungsstufe (70) an ihrem freien Ende zur Integration der Stützscheibe (74) und ihrer elastischen Klemmscheibe (72), die der Untergruppe Führungsscheibe (14) - Hauptreibungsstufe (45) zugeordnet ist, verlängert und verformt sind.

6. Drehschwingungsdämpfer nach einem der vorhergehenden Ansprüche, **dadurch gekennzeichnet, dass** die zweite Reibungsstufe ein drehfest mit der zweiten Führungsscheibe (14) verbundenes Ringlager (62), eine axial zwischen einer radialen Schulter der Nabe und dem Lager angeordnete Schutzscheibe (64) und eine zwischen dem Lager und der zweiten Führungsscheibe (14) angeordnete zweite, axial wirkende elastische Scheibe (63) aufweist.

7. Drehschwingungsdämpfer nach dem vorhergehenden Anspruch, **dadurch gekennzeichnet, dass** die erste Führungsscheibe (13) mittels eines Kegellagers (40) an der Nabe angebracht ist und dass dieses Kegellager ein durch die zweite, axial wirkende elastische Scheibe (63) der zweiten Reibungsstufe, die in dem radial im Inneren der die Hauptreibungsstufe bildenden Elemente frei gelassenen ringförmigen Raum angeordnet ist, belastetes Reibelement bildet.

8. Drehschwingungsdämpfer nach einem der vorhergehenden Ansprüche, **dadurch gekennzeichnet, dass** die erste Reibscheibe (50) des Hauptdämpfers mit Umfangsspiel mit der Scheibe (22) verbunden ist.

## Claims

1. Torsion damper comprising several circumferentially acting elastic damping stages and several axially acting friction stages, of the type comprising a hub (17) intended to be connected to a shaft, a main damping stage (20) comprising a hub damper plate (22) provided with internal teeth mounted with predetermined angular clearance on external teeth on the said hub, two annular plates or first and second guide washers (13, 14) disposed axially on each side of the said hub damper plate and first circumferentially acting elastic means (23a, 23b) interposed circumferentially between the damper plate and the said guide washers and a torsion predamping sub-assembly (28), on the one hand, interposed between the hub (17) and the hub damper plate (22) and, on the other hand, interposed axially between one of the guide washers (13), referred to as the first guide washer (13), and the hub damper plate (22), the said torsion predamping sub-assembly comprising circumferentially acting elastic means (38), referred to as second elastic means (38), with a lesser stiffness than those of the first elastic means (23a, 23b), a second friction stage (60) being arranged in an annular space left free radially inside the elements making up a main friction stage (45) between the said hub and the second guide washer (14), and an intermediate friction stage (70) comprising an intermediate friction washer (76) which is in contact with the hub damper plate (22) and which meshes with the said hub (17) with a circumferential clearance less than that provided between the teeth on the hub (17) and the teeth on the hub damper plate (22), **characterised in that** the main friction stage (45) is arranged axially on each side of the second guide washer (14), and comprises two support washers (47, 48) disposed on each side of the second guide washer (14) and joined by axially oriented struts (49) passing through the said second guide washer, a first friction washer (50) rotationally coupled to the said hub damper plate (22) and interposed between the second guide washer (14) and a support washer (48) and a first elastic clamping washer (56) interposed between the same guide washer (14) and the other support washer (47), and **in that** the intermediate friction stage (70) is arranged axially between the said hub damper plate (22) and the second guide washer (14) of the said main friction stage and comprises:
- an intermediate support washer (74), in contact with the intermediate friction washer (76), rotationally connected by lugs (78) to the second guide washer (14),
- an intermediate elastic clamping washer (72), interposed between the said intermediate support washer (74) and a support washer (48) of the said main friction stage (45),
so that this intermediate friction washer (76) acts at the end of the predamping phase, that is to say at the end of the relative movement of the hub damper plate (22) with respect to the hub (17), by friction on the hub damper plate (22) and the said intermediate support washer (74), and so that the intermediate friction stage (70) acts during the functioning of the main damping stage solely by friction of the intermediate friction washer (76) on the intermediate support washer (74).

2. Torsion damper according to the preceding claim, **characterised in that** the load on the intermediate friction stage (70) is less than the load on the main friction stage (45) and greater than the load on the second friction stage (60).

3. Torsion damper according to any one of the preceding claims, **characterised in that** the aforementioned washers constituting the main friction stage (45) and the intermediate friction stage (70) have diameters close to one another.

4. Torsion damper according to any one of the preceding claims, **characterised in that** lugs (78) on the intermediate support washer (74) of the intermediate friction stage (70) pass through holes (79) in the second guide washer (14) radially above the struts (49) of the main friction stage (45), the said struts (49) also passing through the said holes.

5. Torsion damper according to the preceding claim, **characterised in that** the lugs (78) of the intermediate support washer (74) of the intermediate friction stage (70) are extended and deformed at their free end for integration of the support washer (74) and its elastic clamping washer (72) associated with the sub-assembly consisting of guide washer (14) and main friction stage (45).

6. Torsion damper according to any one of the preceding claims, **characterised in that** the second friction stage comprises an annular bearing (62) rotationally connected to the second guide washer (14), a protection washer (64) interposed axially between a radial shoulder on the said hub and the said bearing and a second axially acting elastic washer (63) interposed between the said bearing and the second guide washer (14).

7. Torsion damper according to the preceding claim, **characterised in that** the first guide washer (13) is mounted on the said hub by means of a cone bearing (40) and **in that** this cone bearing forms a friction element loaded by the second axially acting elastic washer (63) of the second friction stage, arranged in the annular space left free radially inside the elements constituting the said main friction stage.

8. Torsion damper according to any one of the preceding claims, **characterised in that** the first friction washer (50) of the main damper is coupled to the damper plate (22) with circumferential clearance.
